(19) Europäisches Patentamt / European Patent Office / Office européen des brevets

(11) **EP 3 789 948 A1**

(12) **EUROPEAN PATENT APPLICATION**

(43) Date of publication:
**10.03.2021  Bulletin 2021/10**

(51) Int Cl.:
**G06Q 40/00** (2012.01)      **G06Q 30/00** (2012.01)
**G06N 5/00** (2006.01)      **G06F 11/00** (2006.01)

(21) Application number: **19020508.8**

(22) Date of filing: **04.09.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Frennbro, Per**
**226 51 Lund (SE)**

(72) Inventor: **Frennbro, Per**
**226 51 Lund (SE)**

(74) Representative: **Tzeuton Tchangoum, Eric Olivier**
**SOTERYAH IP**
**199 rue Hélène Boucher**
**34170 Castelnau-Le-Lez (FR)**

(54) **COMPUTER IMPLEMENTED SYSTEM, METHOD AND PROGRAM FOR PROCESSING DATA IN ORDER TO IDENTIFY ONE OR MORE ANOMALIES**

(57)    The invention concerns a computer implemented system (1a) for detecting an anomaly in a set of data gathered progressively in time with inputs and outputs, the system comprising
-preferably qualifying modules (1, 2, 2a, 2b,..., 2e) for determining if the data qualify for going through the analysis process;
-preferably overview model modules (3, 3a) for determining if the global data are abnormal by means of one or more overview model;
- detail model modules (4)for determining if one or more individual data is abnormal by means of one or more detail model, in particular if the global data are abnormal; and/or
-AI modules for analysing the data based on deep learning/neural networks analysis with autoencoders; and/or machine learning or reinforcement learning and/or Multilayer Perceptron (MLP) procedures to detect patterns of data.

The invention aims in particular at finding singular anomalies, in particular in company accounts.

Fig. 2A

**Description**

The invention relates to computer implemented systems, methods and programs for processing data in order to identify one or more anomaly. The invention relates more particularly to computer implemented systems, methods and programs for processing transactional data, preferably accounting data, to identify an abnormal data such as a fraud in the accounts.

In the field of the invention, computer software solutions are found mainly for reporting the data, in particular the accounting data. However, in order to find an anomaly in a vast number of data, one usually reviews the data one by one to determine which one is abnormal.

When referring to accounts, anomalies in account may imply a falsification of the accounts, or presenting untrue reflections of the company's financial situation.

Thus, there is a need to have a digital tool for automatically processing data and automatically identifying singular anomalies.

To this end, the invention concerns a computer implemented system for detecting an anomaly in a set of data gathered progressively in time with inputs and outputs, the system comprising

- preferably qualifying modules for determining if the data qualify for going through the analysis process;
- preferably overview model modules for determining if the global data are abnormal by means of one or more overview model;
- detail model modules for determining if one or more individual data is abnormal by means of one or more detail model, in particular if the global data are abnormal; and/or
- AI modules for analysing the data based on deep learning/neural networks analysis with autoencoders; and/or machine learning or reinforcement learning and/or Multilayer Perceptron (MLP) procedures to detect patterns of data.

Advantageously, the invention concerns an automatic computer implemented system as a tool analysing the data to find anomalies.

According to other aspects of the system taken individually or combined in any technically possible combination:

- the overview model modules and the detail model modules are used and their results are to confirm or to be confirmed by the AI modules.
- The qualifying modules comprise means for implementing one or more of

  ○ checking the statistic validity of the data (2a);
  ○ reconciling the theoretical data (2b), in particular the accounts, with actual data, in particular from the bank account;
  ○ comparing inputs and outputs in different periods (2c) to determine if there is a steady situation, in particular through calculating cashflows and/or calculating profit and loss;
  ○ calculating trajectories in different periods (2d) to determine if there is a steady situation;
  ○ verifying company accounts journal;
  ○ comparing past patterns and current patterns of the data (2e).

- the overview models comprise one or more of

  ○ the Beniesh M-score;
  ○ the Benfords Law;
  ○ the z-score;
  ○ a Black Scholes Model (BSM) type.

- the overview model is applied in several dimensions, in particular supplier, sales, salaries and asset analysis.
- the overview model modules are refined by using error level analysis to qualify or disqualify the results of either of the analysis.
- the detail model module is based on a Black Scholes Model (BSM) type,
- the detail model module is applied in several dimensions, in particular income, expenses, long term liabilities, short term liabilities, assets, salary, travel expenses.

The terms "Black Scholes Model-type" should be understood as a statistical model for analysing the deltas of the individual data, corresponding to what is called the Black-Scholes model in the financial industry. The same type of model is used in engineering relating to radiation of heat and is called the Heat Equation (HE) or relating to forces in mechanics of construction and is called the Finite Element Method (FEM).

The invention further relates to a computer implemented method for detecting an anomaly in a set of data gathered progressively in time with inputs and outputs, the method the steps implemented by the digital modules of the computer implemented system of the invention.

More generally, the invention relates to a computer implemented method for detecting an anomaly in a set of data gathered progressively in time with inputs and outputs, the method comprising

- preferably a qualifying step for determining if the data qualify for going through the analysis process;
- preferably an overview model step for determining if the global data are abnormal by means of one or more overview model;
- a detail model step for determining if one or more individual data is abnormal by means of one or more detail model, in particular if the global data are abnormal; and/or
- an AI analysis step for analysing the data based on deep learning/neural networks analysis with autoencoders; and/or machine learning or reinforcement learning and/or Multilayer Perceptron (MLP) procedures to detect patterns of data.

According to other aspects of the method taken individually or combined in any technically possible combination:

- the qualifying step comprises one or more of

  ∘ checking the statistic validity of the data;
  ∘ reconciling the calculated data, in particular the accounts, with actual data, in particular the bank account
  ∘ comparing inputs and outputs in different periods to determine if there is a steady situation, in particular through calculating cashflows and/or calculating profit and loss;
  ∘ calculating trajectories in different periods to determine if there is a steady situation;
  ∘ comparing past patterns and current patterns of the data.

- the overview model step is made in several dimensions, in particular supplier, sales, salaries and asset analysis.
- the overview model step is refined by using error level analysis to qualify or disqualify the results of either of the analysis.
- the detail model step is made in several dimensions, in particular income, expenses, long term liabilities, short term liabilities, assets, salary, travel expenses.

The invention also concerns a computer program [product] comprising instructions which, when the program is executed by a computer, cause the computer to carry out the modules of the system according to the invention, or the steps of the method according to the invention.

The invention will now be presented in details via the description of non-limitative embodiments of the invention, and based on the enclosed drawings, among which:

- figure 1 is an illustration of a method according to the invention;
- figure 1A is an illustration of a system according to the invention;
- figure 2 is an illustration of a method according to a preferred embodiment of the invention;
- figure 2A is another illustration of a method according to a preferred embodiment of the invention;
- figures 3A and 3B are illustrations of a first simplified example of identification of an anomaly based on the invention;
- figures 4A to 4C are illustrations of a second simplified example of identification of an anomaly based on the invention;
- figure 5 is an illustration of a third simplified example of identification of an anomaly based on the invention; and
- figure 6 is an illustration of an embodiment of the invention; and
- figure 7 is an illustration of an embodiment of the invention implementing an auctoencoder model.

The invention concerns a computer implemented system 1a, for processing data in order to identify one or more anomaly. The invention further concerns a corresponding method and program.

The invention relates more particularly to a computer implemented system1a for processing transactional data, preferably accounting data, to identify an abnormal data such as a fraud in the accounts.

More generally, the invention is applied to a set of data gathered progressively in time with inputs and outputs.

From a technical point of view, there is a need for a lot of computational power to perform all detections and analysis in the system performing the analysis.

In the preferred embodiment, the system is applied to accounts, more particularly detecting anomalies in the accounts (1) to find any falsification of the accounts, or any untrue reflections of the company's financial situation.

The preferred embodiment implies dynamically adding or retracting calculations and models.

Most fraud detection is very basic such as checking number of transactions or invoices per month as being too few to be able to sustain a company's revenue and provide livelihood to staff.

The strategy of the invention includes analysis of multiple models to make them deliver analysis that later on can be used for cross checking the accounts to triangulate and find single transactions in the accounts

In an embodiment, by using Deep learning models such as "Detection of Anomalies in Large-Scale Accounting Data using Deep Autoencoder Networks" single invoices can also be detected as anomalies if the deep learning AI is coded to detect Accounts receivable and Accounts payable invoices or by going through the accosting journal(s) with the same software.

The AI modules implementing deep learning may be applied right away on the data to find the anomaly. Preferably, they are used as a confirmation of the analysis with the other modules.

The principle of detecting fraud is to stepwise add more and more power into the analysis. Like, if the main detection formulas detect something is wrong in the overview detection results then the next level is added. Overview analysis is the main models like Beneish M and Benfords or z-score that can detect anomalies but not singularities.

The system 1a comprises computer implemented digital modules including hardware and software elements. The system may include one or more computers and/or servers that may be connectable to other computing devices through the internet.

In an embodiment, the system may comprise a qualifying step for determining if the data qualify for going through the analysis process.

The qualifying step is applied by corresponding modules.

The qualifying modules may comprise a Synchronisation module applying a Synchronisation step 1 further detailed below.

More generally, according an embodiment, the qualifying step comprises one or more of

- checking the statistic validity of the data 2a;
- reconciling the calculated data 2b, in particular the accounts, with actual data, in particular the bank account;
- comparing inputs and outputs in different periods 2cto determine if there is a steady situation, in particular through calculating cashflows and/or calculating profit and loss;
- calculating trajectories in different periods 2d to determine if there is a steady situation;
- comparing past patterns and current patterns of the data 2e.

Preferably, these thresholds methods can be singular or more or all, but run more preferably in sequence of the below.

More preferably, normal mathematical statistical precisions for validity applies (step 2a) such as having the minimum number of transactions to have valid statistic calculations, and if not disqualify the data. This is further detailed in the example below.

In particular, where the anomalies or fraudsters are found, the corresponding data are filtered out. The more the analysis is done, the more anomalies are filtered out.

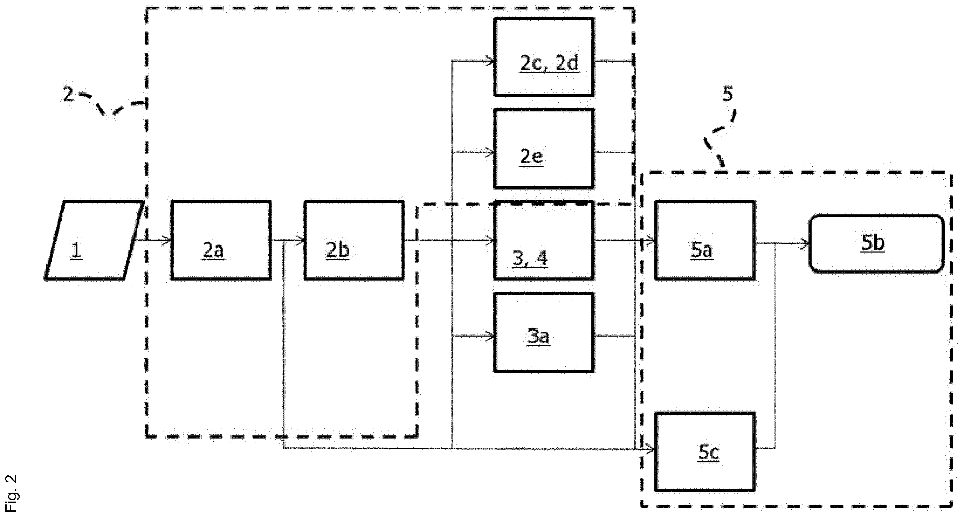

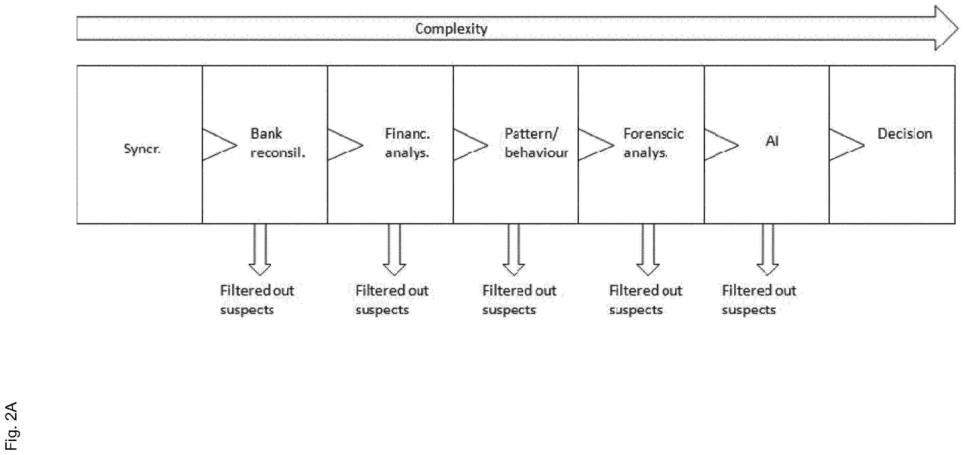

When referring to figure 2A, the analysis starts from the left, for every box it filters out more and more fraudsters.

### 0. Synchronisation (step 1)

The system may comprise a Synchronisation module applying a Synchronisation step at first to check if the company may go through the verifications of the invention. This may include checking if the company exists, if the identity document of the company (e.g. passport, Kbis...) is real, what is the personal credit score...

### 1. Bank account reconciliation (step 2b)

If the accounts and the bank accounts have similar transactions recorded the likelihood of fraud decrease immediately to almost non-existent in the historical data. If the variance between the bank accounts and the accounts is more than 30% or in the close area the likelihood of fraud is bigger and can then disqualify further analysis of the accounts.

This may include bank verification of payments, customer verification...

In an embodiment, the system is arranged in such way that simple thresholds are added by making safe and good analysis of the accounts first to filter out "dumb" frauds. This can be for example 2 invoices and nothing else is in the accounts. At this point, for a company that is not having a reliable book keeping, any anomaly may be detected.

## 2. Financial analysis of the accounts (steps 2c and 2d)

In this area there can be 5 or 100 different financial calculations calculating cashflows, trajectory, trends, salaries, profit and loss etc. it is not important which analysis that are made here it is more the comparison between the different months that is of importance. Of course, the more calculations the better granularity.

The outcome of the analysis should tell if there is a steady situation in the accounts which can be a flat horizontal development, an increase that is steady or a decrease that is steady. This steady situation, within decent variation, shows the company has a proper financial situation.

## 3. Behavioural and Pattern detection (step 2e)

If the former financial calculations show a steady flow of expenses and incomes also in the history from both the accounts as well as from the bank accounts the likelihood for fraud is small.

However, if the patterns in the past are almost the same, but in the recording of for example invoices or salaries suddenly increase or change dramatically we are talking about outliers if they are not present in the past with the same pattern.

To pattern detection we can also detect the same size of invoices (ACCREC-Sales invoices and ACCPAY-supplier invoices) or any transaction in the accounting system and a constant similar fluctuation month on month which then shows nothing strange is there.

If this fluctuation starts happening in the future accounts, and is more and more violent, shows in the nearest past or future, this implies something is wrong and must be detected as an anomaly. Several other detections can be made here, for example patterns of invoices arriving at the same numbers, dates or even during weekends in the creation dates. The pattern detection is not limited to a set number of analyses but have the intention of finding variances from a mathematical level that shows big fluctuations around dates and numbers or even specific customers or suppliers.

More generally, these steps may include basic financial analysis in the accounts through using one or more of: cashflow analysis, trajectory analysis, profit and loss analysis, reconciliation between bank account and accounts, outlier analysis, fluctuation analysis, review payment terms, review movement of transaction in time/Date-Time patterns, ... etc. These models detect basic strange patterns and behaviors in the accounts and can qualify if it is even worth sending the accounts into a fraud detection process.

## 4. The real fraud detection (or forensic analysis)

This area is aligned towards finding deeper variances in the accounts than what is made in the above methods for filtering out accounts that are not correct or have too big deviations.

For this the detection is made with two levels of detection:

a. The first level is detecting anomalies in the accounts on an overall level whilst analysing the accounts.
b. Detects anomalies through analysing the accounts for single transaction anomalies.

## A- General detection (on the global data) (step 3)

The general detection may use overview models like Beneish M, Benford, z-score, BSM-type in multi dimensions to decide if something is not correct in the accounts.

The overview model modules enable to determine if the global data are abnormal, in view of at least most of the overview models. For example, two overview models over three may reach the same conclusion "there is an anomaly" in the data.

According an embodiment, the overview models comprise one or more of

- the Beniesh M-score;
- Black-Scholes-type;
- the Benfords Law; and
- the z-score.

The overview models preferably uses the Beniesh M-score, the Benfords Law, Black-Scholes-type and the z-score in the analysis in several dimensions, ie.: supplier, sales, salaries and asset analysis to uncover anomalies in general and can with the data from previous analysis and additional analysis decide if there is fraud in the accounts.

Then the different analysis will point out a common direction on all areas and works like a weather system, if all six analyses say "not anomaly" then it is not an anomaly.

According an embodiment, the methods of analysis of the global data are refined by using error level analysis to qualify or disqualify the results of either of the analysis (step 3a).

The reason to this is that for example the Beneish M-score have a high error threshold, 50%, that can give false truths. If all analysis says the same of for example 4 out of 6 analysis states the same (anomaly or not) then the final result points in the direction of what the systems considers a true and safe likelihood of the results, anomaly or not.

This can be refined further by using error level analysis to qualify or disqualify the results of either of the six analyses these calculations come up with.

**B- Detailed detection (on the individual data)** (step 4)

To find the specific transaction that is wrong the system may add the cross reference/combination of calculations in one of the previous steps and, for example the BSM method in multiple dimensions to correlate findings what area that is wrong. This then shows a result where the single transaction can be detected in the automated system.

The system further comprises detail model modules for analysis of the individual data, in particular in the account.

The detail model modules enable to determine if one or more individual data is abnormal.

The detail model modules are preferably applied if the global data are found abnormal.

According an embodiment, one of the delta models of the BSM-type can be applied as they all do the same, calculate deltas or differences

Here the differences in invoices, revenues and profits are calculated on a very detailed level..

The Black-Scholes detect differences and the differences can fluctuate within a reasonable range. Typically between 5-10% on a monthly basis. If the fluctuation becomes too big or suddenly increase dramatically as shown in model 3b where the sales suddenly makes a unreasonable jump then the Black-Scholes model shows this and alerts the system about a sudden detection of rapid change.

The principle is that everything around us is in balance.

The skilled person knows the corresponding formulas as such, and how to apply them. Additional information may be found in encyclopaedias.

To show the simplicity of the formulas the three below examples are shown.

Example 1 (BSM): incomes area balanced by expenses and profit.

$$Income - Expense - Profit = 0$$
Formula 1

Example 2 (FEM): in a house there are the same forces pushing the house down as pushing the house up. In human language, the weight of the house is always in balance with what the ground can carry otherwise the house is sinking.

$$Force_{UP} - Force_{DOWN} = 0$$
Formula 2

Example 3 (HE): If you heat up the house the house gets warmer and the reason to it is getting warmer is the insulation preventing the heat to be noticeable (When you heat a burner without walls you are heating up the atmosphere on earth, but the "house earth" is huge so you do not notice it). This means you can increase the insulation in a house and for less money get more heating since more insulation prevents the heat to disappear, but you can still notice the stream of heat outside the house.

$$Heating_{UP} - Heating_{FORCE} = 0$$
Formula 3

All three examples above show the same principle, left is balanced by the right side of the equation.

As can be seen in the simple expression of the formulas the difference between one or two dimensions create a difference, also called DELTA, or shown as $\Delta$ (the Greek letter Delta). The detail models, and preferably overview models, may be referred to as delta models. Steps3 and 4 can thus be referred to as the step of Delta analysis.

The principle of fraud detection is to analyse Deltas in several dimensions. When you investigate the methods like the Beneish-M or z-score produce it is also including the standard deviation from a quite balanced Delta. These standard deviations should, if all is correctly balanced, stay on the same side, positive or negative if the numbers are not anomalies or false.

The Delta analysis may be done or confirmed by deep learning in particular with autoencoders; or with machine learning. Deep Learning Autoencoders are the absolutely latest in artificial intelligence.

It is solving a lot of problems with finding datasets to train the « old school » Machine Learning or Reinforcement learning.

Deep Learning with Autoencoders works as follows:

1. It creates a vector of every transaction, combining text, dates, amounts, number of items, sender/receiver etc.

2. It then converts this into a big matrix where it calculates patterns and behaviours automatically with these vectors.

3. Then it shows if something is wrong, it means it analyse all transactions and then show these are the transactions that should be there and theses should not be there.

4. In our model we have made additional adjustment to the model DL Autoencoder model compared to the standard model. It can through this track patterns and changes in also invoices in detail. It is therefore added MLP or Multi Layer Perception procedures that can track patterns in every level. The model also compare text patterns and amount patterns amongst many other things in the invoices that shows anomalies and can detect singular invoice falsifications.

The precision in our model we have developed is 95% likelihood that the single transaction is an anomaly.

This may then be confirmed by all other analysis models we have discussed above.

Then the figure on the last page is used to triangulate the total results. The DL Autoencoder is superstrong we have done so it would be likely that the whole analysis will follow this, but it will be confirmed by the others to minimise the failure rate.

So the preferred analysis is the DL Autoencoder that solves it all.

Step 5 generally concerns the result of the analysis. Step 5a is a fraud cross check determining where is the fraud. Step 5b is the result of the analysis.

The preferred embodiment is shown in figure 2 describing how a single fraud detection model can be arranged including AI and the feed to the AI (step 5c).

Advantageously, the invention concerns an automatic computer implemented system as a tool analysing the data to determine anomalies.

Moreover, regarding accounts with a significant number of transactions, the invention limits the time spent by an operator reviewing the data to find an anomaly.

The solution here is to combine all calculations and make them work like a weather system, if all calculations are stating it is an anomaly then the system can say the same.

All analysis models become supportive to each other and indicate on their own if accounts have anomalies.

Additional error analysis is also supporting better results in this patent and model which means they can conclude with better precision.

### Single dimension

Analysing the Deltas in one dimension is like first producing toothpicks and then selling the toothpicks. Sales and production must be in balance, ($Sales_{volume}$-$Production_{volume}$=0). If this is not in balance something is wrong. Any other dimensions can be compared here to find either fraud or even production dysfunctions.

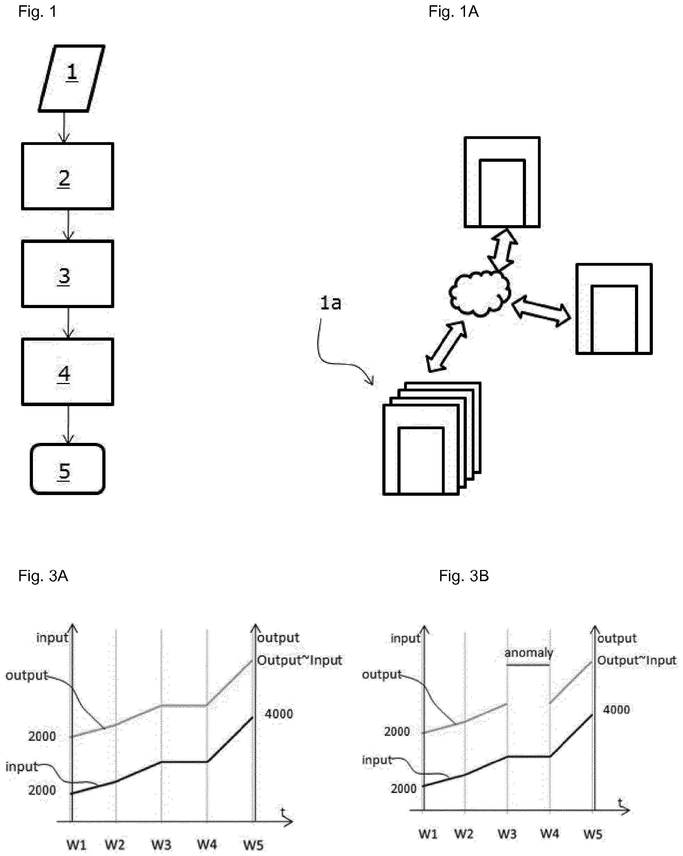

In figure 3A, the graph shows the production in a normal company without fraud to the left. The right shows the numbers are false if sales is claimed being more than what the production shows.

The one dimensional analysis in figures 3A and 3B shows that if someone is trying to tell that the sales in one week is much higher than the production in the other weeks and no additional supply for the production is sourced and the production the week after is back to the same linear relationship to the week before the higher sales level shows there is an anomaly. This week with the increased sales with no other signs in the company accounts of increase can be said to be a false statement or an anomaly.

An increase of production volumes are usually a build up over time or during a very specific period of ramping up. Then this can be seen in other dimensions such as raw material supply increase.

### How it works in single dimension

This is quickly seen on the lines in the graphs. You can not sell more than what the production can produce. This means the sales numbers are either wrong or false, they are anomalies to be less provocative in the phrasing of the status. With this graph you can not detect if the sales shown is a mistake or if it is a false statement.

In supply chain financing you can do the same analysis. You can see if someone is falsifying the supply chain costs. This means you can not have more (or less) supply to the production line than what the production line is using to produce the goods to sell. Then the supply chain is either going to wrong receiver or the production is exaggerated to support other areas in the accounts. Then the evidence of the falsifications is clear.

Additionally the variances/deltas in the accounts can be analysed deeper if there is a complementary analysis model like Black Schole's that can analyse the deltas in multiple dimensions.

More generally, according an embodiment, the analysis of inputs and outputs of each individual data is made in several dimensions, in particular income, expenses, long term liabilities, short term liabilities, assets, salary, travel expenses.

## Multi dimension

In multiple analyses the complexity increases. The analysis can be made in many ways. The normal way it is made by delta analysis (using BSM, FEM or HE)

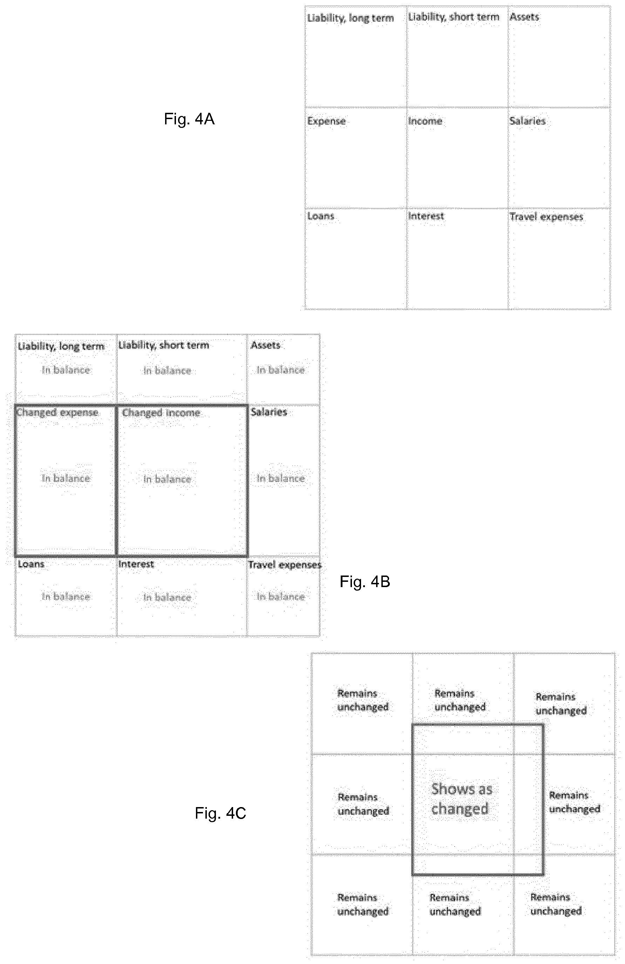

Figures4A-4C concern Images showing how Black Schole's law can be used in two dimensions to detect fraud. All areas must be in balance to not indicate fraud.

In Figure 4A-4C the example shows that the surrounding values must follow the change in income. If the income increases there must also be an increase in the expense in the company. If only the income change there is something wrong.

Example: Using a simplistic explanation here is easiest way of explaining it. A lot of different scenarios can be used, but this is at the principle level.

You cannot sell more toothpicks without having more expenses for more wood in the production to produce more tooth picks.

At the same time you must see the number of machines increasing to cope with the increased production(Long term liabilities) or them using more power to increase the production (the supply of power increase, but also the Cost of Goods sold increase), the salaries increase since you need more staff to man the machines.

What we now have is a full equation that should be in balance if everything is correctly entered into the accounts.

Let's try to formulate it in simple terms:

$$Tooth Picks_{SALES} - Supply_{WOOD} - Supply_{POWER} - InterestLongTermLiability_{MACHINE} - Salaries_{ToothPicks} - Profit_{ToothPicks} = 0$$

Formula 4

This formula shows different areas of the accounting system is involved and not only one dimension.

## A fraud example

Let's now compare company A with company B who in the balanced example has exactly the same toothpick volumes and values in all variables;

- ToothPicks$_{SALES}$= 100
- Supply$_{WOOD}$= 30
- Supply$_{POWER}$= 20
- InterestLongTermLiability$_{MACHINE}$ = 10
- Salaries$_{ToothPicks}$ = 20
- Profit$_{ToothPicks}$ = 20

Formula with values: 100 - 30 - 20 - 10 - 20 - 20 = 0

One day Company B needs more money. They issue a false Toothpick invoice. Instead of 100 that the machine can produce they say 200 in sales instead.

If this value now is added to the formula with values the equation is not in balance.

Formula with values: 200 - 30 - 20 - 10 - 20 - 20 ≠ 0, i.e. an excess of 100 is now shown which creates an error. Left and right sides must be balanced.

All areas in the company books can with this model be analysed and scrutinised by using the principle of the balanced accounts.

The above example can be visually shown in the graphics in Figure 3A and 3B.

## Detecting the single transaction that fails the balance.

The delta models shown above are standard procedures that can detect anomalies in the balances.

The model builds on assessing historical relationships, deltas, within a company's accounts.

Here normal mathematical statistical precisions for validity applies, like for example you can not have only two transactions in the accounts and believe you can do analysis that give any precision whatsoever. If you do such situation will only giving a result that more or less can be transaction 1 is wrong whilst transaction 2 is correct, what did this then do to the results.

Statistical validity calculations must determine if the amount of historical data present in the accounts is enough or it must be disqualified. If disqualified the results is not possible used to detect neither fraud nor other financial characteristics of the company that is analysed.

The Benish M, Black-Scholes, Benfords law, Z-Score calculations considers this in the construction itself. For Benish M the validity is determined by using empirical validation in the development of the formula. The formula itself is constructed to be able to detect anomalies in annual reporting (which can be done in a monthly reporting also)

With the three models, Beneish M, Benford, and Z-Score in multiple dimensions it can be decided if there is an anomaly present in the accounts.

The Delta analysis may be done or refined by deep learning in particular with autoencoders or machine learning in particular through AI. When the deep learning or the machine learning is finely tuned, it may for example detect that for this analysed pattern, this or that invoice is fraudulent.

The Delta calculations (BSM, FEM or HE) can not alone detect the single transaction by combining the first single detection systems mentioned above and their calculated values in the areas.

Bank account reconciliation, financial analysis of the accounts, Pattern detection. All these areas have several values that are calculated before the company accounts finally are going through the delta calculation. These areas find correlations between values which then can be used to describe the company from different views into the accounts.

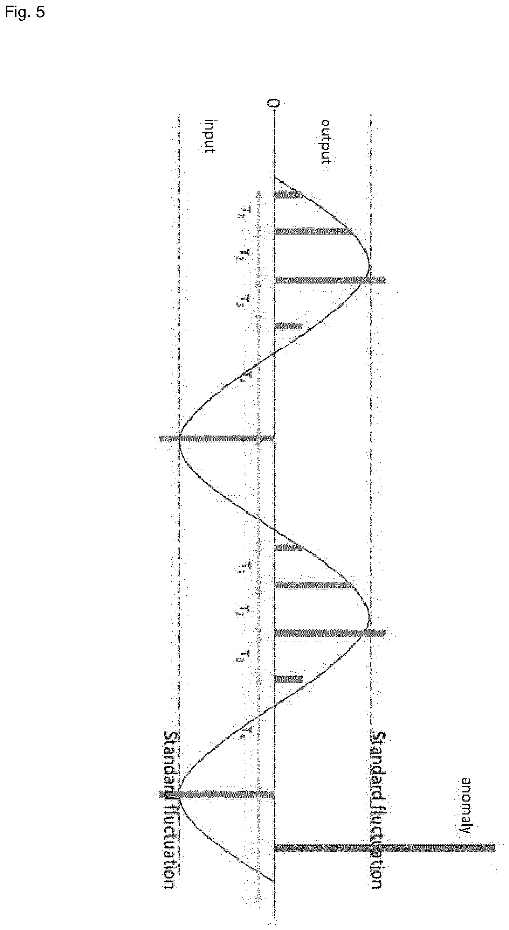

Figure 5 depicts how a single transaction can be detected by finding out how other transactions patterns and values show the picture of the company's behaviour and status.

The delta calculations are in the final phase, but they are also re-used to detect the anomaly/fraudulent transaction.

When looking into the accounts from a multi-dimensional view Figure 4 shows how cross referencing the patterns and values can give a decision in the single transaction by "calculating" backwards after having made relational calculations between the transactions in the accounts.

The cross referencing within the books must also be analysed with standard deviation and standard error methods to capture values describing the transaction in the wrong way and therefore that value cannot be used to describe the expected anomaly.

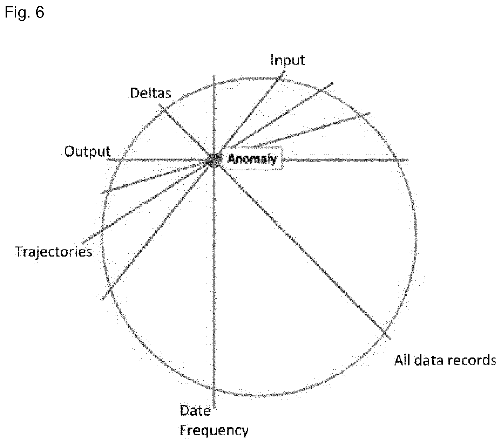

Figure 6 Picture showing an example how values can be found by using pattern and value detection in all areas to find a single transaction in the company accounts to point out a single anomaly. The number of different lines can be endless to determine the anomaly in the transaction and the above is only to illustrate how to look at it. We currently do ca 100 different calculations that will be reused.

The invention further relates to a computer implemented method for detecting an anomaly in a set of data gathered progressively in time with inputs and outputs, the method the steps implemented by the digital modules of the computer implemented system as described above.

The invention also concerns a computer program [product] comprising instructions which, when the program is executed by a computer, cause the computer to carry out the modules of the system as described above, or the steps of the method as described above.

From a pure technical point the system can run on any programming language or server as long as they have enough processing power.

The above can be made with AI and machine learning/Reinforcement learning as a super power to the different delta methods.

Fraudsters are usually focused on the amount and can therefore come up with strange texts and amounts and number of items that usually stick out. By using Deep Learning and autoencoders all details in an invoice becomes vectorised and are then compared with deep AI analysis.

Deep Learning Autoencoders can detect anomalies in text, amounts, number of pieces and spot anomalies

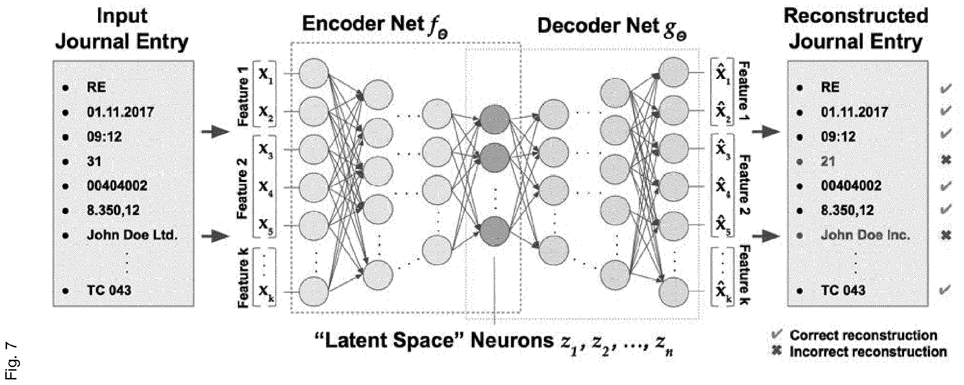

Figure 7 shows the principle of the auctoencoder model which is "Detection of Anomalies in Large Scale Accounting Data using Deep Autoencoder Networks" by Marco Schreyer, Timur Sattarov, Damian Borth, Andreas Dengel and Bernd Reimer.

The publication is available via arXiv under the following link: https://arxiv.org/abs/1709.05254.

This is furthered by adding encoders for invoices or accounting transactions with all parameters in all invoices each one separately in accounts. Through this our precision is 95% in detecting false invoices.

The same principles can be used on journals where the whole list of transactions can be analyses and categorised with the same method of using vectorisation of all accessible data in each and every transaction. The precision immediately increase to above 95% in precision.

## Coding the solution

The coding of this solution may add coding in the areas of the different method steps. This coding can be made in any language but it is important to understand the calculations are extensive and computer power intensive to make 100's of calculations and cross correlate these calculations with each other.
The system above is well suited to use Artificial Intelligence models on where either Machine Learning or Reinforcement Learning models can be easily applied.
In such situation the calculations and the models above must act as a supporting analysis power until the machine learning have enough learning added to be able to detect anomalies on its own without the analysis steps above.
When the steps above do their analysis and the machine learning is also making the same analysis based on learning, the model becomes very difficult to fool.

## Computational power

Doing the above calculations for a few account transactions is simple, but when we do calculations through hundreds or even thousands of transactions per month or year it becomes a heavy operation for a human being.
Using computational power through servers that can calculate big volumes of data in seconds or less is therefore the way to do it.
In another embodiment, the system may be used on public records of companies, such as the annual reports at Companies House.
From the reports, the system may extract fraudulent data with Beneish model.
Beneish model is constructed around "reading" data from annual reports and enable to detect if there is something wrong in the "whole book".

## Claims

1. Computer implemented system (1a) for detecting an anomaly in a set of data gathered progressively in time with inputs and outputs, the system comprising

   - preferably qualifying modules (1, 2, 2a, 2b,..., 2e) for determining if the data qualify for going through the analysis process;
   - preferably overview model modules (3, 3a) for determining if the global data are abnormal by means of one or more overview model;
   - detail model modules (4)for determining if one or more individual data is abnormal by means of one or more detail model, in particular if the global data are abnormal; and/or
   - AI modules for analysing the data based on deep learning/neural networks analysis with autoencoders; and/or machine learning or reinforcement learning and/or Multilayer Perceptron (MLP) procedures to detect patterns of data.

2. Computer implemented system according to the preceding claim, wherein the overview model modules and the detail model modules are used and their results are to confirm or to be confirmed by the AI modules.

3. Computer implemented system according to any of the preceding claims, wherein the qualifying modules comprise means for implementing one or more of

   - checking the statistic validity of the data (2a);
   - reconciling theoretical data (2b), in particular the accounts, with actual data, in particular from the bank account;
   - comparing inputs and outputs in different periods (2c) to determine if there is a steady situation, in particular through calculating cashflows and/or calculating profit and loss;
   - calculating trajectories in different periods (2d) to determine if there is a steady situation;
   - verifying company accounts journal;
   - comparing past patterns and current patterns of the data (2e).

4. Computer implemented system according to any of the preceding claims, wherein the overview models comprise one or more of

   - the Beniesh M-score;
   - the Benfords Law;
   - the z-score;
   - Black Scholes Model (BSM) type.

5. Computer implemented system according to the preceding claim, wherein the overview model is applied in several dimensions, in particular supplier, sales, salaries and asset analysis.

6. Computer implemented system according to any of the preceding claims, wherein the overview model modules are refined by using error level analysis to qualify or disqualify the results of either of the analysis.

7. Computer implemented system according to any of the preceding claims, wherein the detail model module is based on a Black Scholes Model (BSM) type,

8. Computer implemented system according to the preceding claim, wherein the detail model module is applied in several dimensions, in particular income, expenses, long term liabilities, short term liabilities, assets, salary, travel expenses.

9. Computer implemented method for detecting an anomaly in a set of data gathered progressively in time with inputs and outputs, the method comprising

   - preferably a qualifying step (2, 2a, 2b,..., 2e) for determining if the data qualify for going through the analysis process;
   - preferably an overview model step (3, 3a) for determining if the global data are abnormal by means of one or more overview model;
   - a detail model step (4) for determining if one or more individual data is abnormal by means of one or more detail model, in particular if the global data are abnormal; and/or
   - an AI analysis step for analysing the data based on deep learning/neural networks analysis with autoencoders; and/or machine learning or reinforcement learning and/or Multilayer Perceptron (MLP) procedures to detect patterns of data.

10. Computer implemented method according to the preceding claim, wherein the qualifying step comprises one or more of

    - checking the statistic validity of the data (2a);
    - reconciling the calculated data(2b), in particular the accounts, with actual data, in particular the bank account
    - comparing inputs and outputs in different periods(2c)to determine if there is a steady situation, in particular through calculating cashflows and/or calculating profit and loss;
    - calculating trajectories in different periods(2d) to determine if there is a steady situation;
    - comparing past patterns and current patterns of the data (2c).

11. Computer implemented method according to the preceding claim, wherein the overview model step is made in several dimensions, in particular supplier, sales, salaries and asset analysis.

12. Computer implemented method according to any of claims 8 to 11, wherein the overview model step is refined by using error level analysis to qualify or disqualify the results of either of the analysis.

13. Computer implemented method according to the preceding claim, wherein the detail model step s made in several dimensions, in particular income, expenses, long term liabilities, short term liabilities, assets, salary, travel expenses.

14. Computer program [product] comprising instructions which, when the program is executed by a computer, cause the computer to carry out the modules of the system according to any of claims 1 to 8, or the steps of the method according to any of claims 9 to 13.

Fig. 1

Fig. 1A

1a

Fig. 3A

Fig. 3B

Fig. 2

Fig. 2A

Filtered out suspects

Filtered out suspects

Filtered out suspects

Filtered out suspects

Filtered out suspects

| Decision | AI | Forensic analys. | Pattern/ behaviour | Financ. analys. | Bank reconsil. | Syncr. |

Complexity

Fig. 4A

| Liability, long term | Liability, short term | Assets |
|---|---|---|
| Expense | Income | Salaries |
| Loans | Interest | Travel expenses |

| Liability, long term | Liability, short term | Assets |
|---|---|---|
| In balance | In balance | In balance |
| Changed expense | Changed income | Salaries |
| In balance | In balance | In balance |
| Loans | Interest | Travel expenses |
| In balance | In balance | In balance |

Fig. 4B

Fig. 4C

| Remains unchanged | Remains unchanged | Remains unchanged |
|---|---|---|
| Remains unchanged | Shows as changed | Remains unchanged |
| Remains unchanged | Remains unchanged | Remains unchanged |

Fig. 5

Fig. 6

Fig. 7

Europäisches Patentamt

European Patent Office

Office européen des brevets

## EUROPEAN SEARCH REPORT

Application Number

EP 19 02 0508

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/358268 A1 (VERMA KUNAL [US] ET AL) 8 December 2016 (2016-12-08) * the whole document * | 1-14 | INV. G06Q40/00 G06Q30/00 G06N5/00 G06F11/00 |
| X | US 2017/270526 A1 (FITZGERALD WILLIAM [US]) 21 September 2017 (2017-09-21) * the whole document * | 1-14 | |
| X | US 5 822 741 A (FISCHTHAL SCOTT [US]) 13 October 1998 (1998-10-13) * the whole document * | 1-14 | |
| A | RAVISANKAR P ET AL: "Detection of financial statement fraud and feature selection using data mining techniques", DECISION SUPPORT SYSTEMS, ELSEVIER SCIENCE PUBLISHERS, AMSTERDAM, NL, vol. 50, no. 2, 1 January 2011 (2011-01-01), pages 491-500, XP027556996, ISSN: 0167-9236 [retrieved on 2010-12-11] * the whole document * | 1-14 | |
| A | MOEPYA STEPHEN OBAKENG ET AL: "Increasing the Detection of Minority Class Instances in Financial Statement Fraud", 26 February 2017 (2017-02-26), INTERNATIONAL CONFERENCE ON FINANCIAL CRYPTOGRAPHY AND DATA SECURITY; [LECTURE NOTES IN COMPUTER SCIENCE; LECT.NOTES COMPUTER], SPRINGER, BERLIN, HEIDELBERG, PAGE(S) 33 - 43, XP047407593, ISBN: 978-3-642-17318-9 [retrieved on 2017-02-26] * the whole document * | 1-14 | TECHNICAL FIELDS SEARCHED (IPC) G06Q G06N G06F |

-/--

The present search report has been drawn up for all claims

| Place of search | Date of completion of the search | Examiner |
|---|---|---|
| The Hague | 12 December 2019 | Guenov, Mihail |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 19 02 0508

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KOTSIANTIS S ET AL: "Financial Application of Neural Networks: Two Case Studies in Greece", 1 January 2006 (2006-01-01), ARTIFICIAL NEURAL NETWORKS - ICANN 2006 LECTURE NOTES IN COMPUTER SCIENCE;;LNCS, SPRINGER, BERLIN, DE, PAGE(S) 672 - 681, XP019039941, ISBN: 978-3-540-38871-5 * the whole document * ----- | 1-14 | |

TECHNICAL FIELDS
SEARCHED      (IPC)

The present search report has been drawn up for all claims

| Place of search | Date of completion of the search | Examiner |
|---|---|---|
| The Hague | 12 December 2019 | Guenov, Mihail |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

page 2 of 2

## ANNEX TO THE EUROPEAN SEARCH REPORT
## ON EUROPEAN PATENT APPLICATION NO.

EP 19 02 0508

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2019

| Patent document cited in search report | | Publication date | Patent family member(s) | Publication date |
|---|---|---|---|---|
| US 2016358268 | A1 | 08-12-2016 | NONE | |
| US 2017270526 | A1 | 21-09-2017 | NONE | |
| US 5822741 | A | 13-10-1998 | NONE | |

EPO FORM P0459

For more details about this annex : see Official Journal of the European Patent Office, No. 12/82